# EUROPÄISCHE PATENTSCHRIFT

(11) **EP 4 449 862 B1**
(45) Veröffentlichungstag und Bekanntmachung des Hinweises auf die Patenterteilung: **29.10.2025**
(21) Anmeldenummer: 24154500.3
(22) Anmeldetag: 29.01.2024
(51) Int. Cl.: A01M 1/00, A01M 7/00

(54) **VERFAHREN UND ANORDNUNG ZUM BETREIBEN EINES LANDWIRTSCHAFTLICHEN VERTEILFAHRZEUGS**
METHOD AND ARRANGEMENT FOR OPERATING AN AGRICULTURAL DISTRIBUTION VEHICLE
PROCÉDÉ ET DISPOSITIF DE FONCTIONNEMENT D'UN VÉHICULE DE DISTRIBUTION AGRICOLE

(30) Priorität: 02.03.2023 DE 102023105198
(43) Veröffentlichungstag der Anmeldung: 23.10.2024
(73) Patentinhaber: Deere & Company, Moline, IL 61265 (US)
(72) Erfinder: Somarowthu, Mahesh, Mannheim (DE); Gupta, Manu, Mannheim (DE); Kumar, Prashant, Mannheim (DE); Lokare, Pradeep Praka, Mannheim (DE); Peeters, Willy, Mannheim (DE)
(74) Vertreter: Holst, Sönke

(56) Entgegenhaltungen:
- IT-A1- 201800 010 413
- RU-C1- 2 586 142
- US-A1- 2019 047 010
- US-A1- 2022 153 417

## Beschreibung

Die Erfindung betrifft ein Verfahren und eine Anordnung zum Betreiben eines landwirtschaftlichen Verteilfahrzeugs mit einem Tank für eine auszubringende Flüssigkeit, einem Verteilergestänge mit daran angebrachten Spritzdüsen zur Verteilung der Flüssigkeit auf einer Fläche und einem sich auf dem Boden abstützenden Fahrgestell, das in einer Vorwärtsrichtung über die Fläche bewegbar ist.

### Stand der Technik

Landwirtschaftliche Verteilfahrzeuge, üblicherweise als Feldspritzen bezeichnet, dienen dazu, landwirtschaftliche Produkte auf einem Feld auszubringen. Die Verteilfahrzeuge können als selbstfahrende oder gezogene Fahrzeuge ausgeführt sein oder lösbar an einem Trägerfahrzeug (Ackerschlepper) angebracht werden. Sie umfassen ein relativ breites Verteilergestänge, das zum Transport einfaltbar ist und an dem Düsen zum Ausbringen des Produkts über die Breite des Verteilergestänges verteilt sind. Bei den Produkten handelt es sich üblicherweise um Flüssigkeiten, die zum Düngen auf dem Feld angebauter Pflanzen oder zur Bekämpfung von Krankheiten oder Schädlingen oder Unkraut dienen. Entweder soll das Produkt in vorbestimmten Mengen je Flächeneinheit ausgetragen werden, die über ein Feld konstant sind oder standortspezifisch variieren können, oder die benötigten Ausbringmengen werden vor Ort durch Sensoren erkannt bzw. angepasst, die beispielsweise den Düngemittelbedarf der Pflanzen oder einen eventuellen Schädlingsbefall erkennen. Hierzu werden die Düsen basierend auf einer im Vorab geplanten Ausbringmengenkarte und/oder durch Sensoren gesteuert geöffnet und geschlossen (vgl. beispielsweise EP 3 381 281 A1).

Das Verteilfahrzeug umfasst einen Tank für die auszubringende Flüssigkeit und üblicherweise noch einen Tank für eine Spülflüssigkeit, die dazu dient, die Düsen und/oder inneren Leitungen, Ventile und Pumpen des Fahrzeugs nach dem Ausbringen des Produkts zu reinigen (s. EP 3 620 050 A1 oder WO 2020/126386 A1). Mitunter wird der Inhalt des Tanks für die Spülflüssigkeit auch verwendet, während eines Ausbringvorgangs den Tank für die auszubringende Flüssigkeit aufzufüllen, ggf. unter Zugabe eines Konzentrats des Wirkstoffs der auszubringenden Flüssigkeit.

Insbesondere bei sensorisch gesteuerten Ausbringmengen ist eine Vorausplanung der für einen Verteilvorgang mitzuführenden Flüssigkeitsmengen problematisch, da zum Zeitpunkt der Befüllung des Verteilfahrzeugs an dessen Standort (landwirtschaftlicher Betrieb oder Lohnunternehmen) nicht genau vorbekannt sein kann, welche Mengen tatsächlich benötigt werden. Hierzu kann allenfalls auf Erfahrungswerte aus vergangenen Jahren oder Voraberkundungen der zu bearbeitenden Flächen zurückgegriffen werden, die jedoch stets mit kleineren oder größeren Fehlern behaftet sind (hierzu beispielsweise DE 102 47 490 A1 oder DE 10 2011 055 163 A1). Es sind daher Situationen denkbar, bei denen die im Tank mitgeführten Flüssigkeiten nicht ausreichen, einen geplanten Verteilvorgang zu beenden, ohne den Tank nachzufüllen. Das bedeutet, dass der Bediener des Verteilfahrzeugs zum Standort zurückfahren und den Tank nachfüllen muss, was die Produktivität herabsetzt und einen an sich unnötigen Zeitverlust bedingt. Eine andere Möglichkeit wäre, den Tank mit einem hinreichend großen Sicherheitszuschlag zu befüllen, was in den meisten Fällen jedoch nur dazu führt, dass die Flüssigkeiten unnötig mitgeführt werden und später entsorgt werden müssen.

Es wurden Vorschläge gemacht, in der Landwirtschaft unbemannte Fluggeräte (so genannte Drohnen) einzusetzen, z.B. als Feldspritze (US 2018/0354624 A1, US 2022/0211026 A1), oder zum Versorgen landwirtschaftlicher Arbeitsmaschinen mit Kraftstoff oder Öl (DE 10 2020 127 743 A1) oder zum Versorgen eines Spritzmittel ausbringenden Fluggeräts (US 2018/0194466 A1), nicht aber zum Versorgen einer (üblichen, bodengebundenen) Feldspritze mit Flüssigkeiten. Weitere relevante Stand der Technik Dokumente sind bspw.: IT 2018 0001 0413 A1, US 2022/153417 A1, RU 2 586 142 C1, US 2019/047010 A1.

### Aufgabe

Die vorliegende Erfindung hat sich zur Aufgabe gemacht, ein Verfahren und eine Anordnung zum Betreiben eines bodengebundenen Verteilfahrzeugs bereitzustellen, bei dem die oben erwähnten Nachteile nicht oder in einem verminderten Maße vorliegen.

### Lösung

Diese Aufgabe wird erfindungsgemäß durch die Lehre der Patentansprüche 1 und 10 gelöst, wobei in den weiteren Patentansprüchen Merkmale aufgeführt sind, die die Lösung in vorteilhafter Weise weiterentwickeln.

Demnach wird vorgeschlagen, eine gegebenenfalls notwendige Nachfüllung eines Tanks des Verteilfahrzeugs durch ein Fluggerät durchzuführen. Dadurch wird ein schneller Nachfüllvorgang ermöglicht und eine eventuelle Rückfahrt zum Standort des Verteilfahrzeugs erübrigt sich, falls die ursprünglich mitgeführte Menge der auszubringenden Flüssigkeit nicht ausreichen sollte. Das Fluggerät muss, anders als ein Landfahrzeug, nicht auf öffentlichen Straßen fahren und somit erübrigt sich eine Person, welche ein Landfahrzeug bedient, um die zusätzliche Flüssigkeit zum Verteilfahrzeug zu verbringen.

### Ausführungsbeispiel

In den Zeichnungen sind nachfolgend näher beschriebene Ausführungsbeispiele dargestellt. Es zeigt:
- Fig. 1: eine seitliche Ansicht eines als selbstfahrende Feldspritze ausgeführten Verteilfahrzeugs mit einem daran angedockten Fluggerät zur Auffüllung des Tanks für die Spülflüssigkeit,
- Fig. 2: eine rückwärtige Ansicht des ausgefahrenen Verteilergestänges des Verteilfahrzeugs der Figur 1,
- Fig. 3: eine vergrößerte, schematische Ansicht des Fluggeräts der Figur 1,
- Fig. 4: eine seitliche Ansicht der Oberseite des zweiten Tanks des Verteilfahrzeugs mit einem öffenbaren Deckel nach einer ersten Ausführungsform,
- Fig. 5: eine Draufsicht auf den zweiten Tank des Verteilfahrzeugs mit einer zweiten Ausführungsform eines öffenbaren Deckels, und
- Fig. 6: ein Flussdiagramm zur Betriebsweise des Verteilfahrzeugs und des Fluggeräts.

### Verteilfahrzeug

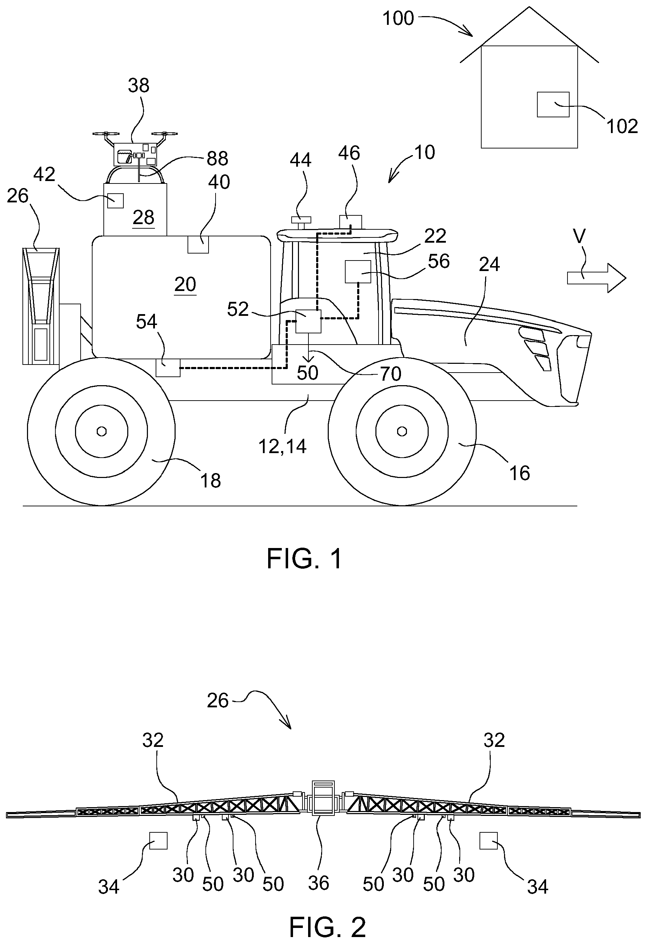

Die Figur 1 zeigt ein Verteilfahrzeug 10 zur Ausbringung von flüssigen Wirkstoffen in Form eines selbstfahrenden Fahrzeugs, das alternativ zur selbstfahrenden Ausführungsform als an einen Ackerschlepper anbaubares oder davon gezogenes Gerät ausgeführt sein könnte (das Verteilfahrzeug wäre in diesem Fall der Ackerschlepper mit dem Gerät). Das Verteilfahrzeug 10 umfasst ein Fahrgestell 12 mit einem Rahmen 14, der sich auf vorderen Rädern 16 und hinteren Rädern 18 auf dem Erdboden abstützt. Die Räder 16, 18 können lenkbar und antreibbar sein. Auf dem Rahmen 14 stützen sich ein erster Tank 20 zur Aufnahme einer auszubringenden Flüssigkeit (in Wasser gelöster Wirkstoff), ein zweiter Tank 28 zur Aufnahme einer Spülflüssigkeit (Wasser) und eine Kabine 22 ab, vor der sich ein Motorraum 24 befindet. Die im Betrieb übliche Fahrtrichtung V im Betrieb ist in der Figur 1 nach rechts gerichtet. Selbstverständlich kann das Verteilfahrzeug 10 auch rückwärtsfahren und dabei auch Spritzmittel ausbringen. Rückwärtig ist am Rahmen 14 des Verteilfahrzeugs 10 ein neigungs- und höhenverstellbares Verteilergestänge 26 angebracht, das in der Figur 2 in einer rückwärtigen Ansicht in einer ausgeklappten Stellung dargestellt ist.

Das Verteilergestänge 26 umfasst einen mittleren Abschnitt 36 und ausklappbare Ausleger 32. Entlang der Ausleger sind Spritzdüsen 30 verteilt, die zum Ausbringen der Flüssigkeit aus dem ersten Tank 20 dienen. Zudem sind über die Breite der Ausleger 32 verteilte, auf das Feld gerichtete Sensoren 34 vorgesehen, die ein Signal an eine Steuereinrichtung 52 liefern, welches eine Information über den Zustand der Pflanzen auf dem Feld enthält. Die Sensoren 34 können beispielsweise den Bedarf der Pflanzen an Düngemittel oder einen eventuellen Befall mit zu bekämpfenden Schädlingen (Insekten, Pilze, Wildkräuter) erkennen, sei es optisch oder auf beliebige andere Weise. Das Ausgangssignal der Sensoren 34 wird von der Steuereinrichtung 52 verarbeitet und nötigenfalls werden über einen Bus 70 Steuersignale an Aktoren 50 der einzelnen Spritzdüsen 30 abgegeben, um die Ausgabe des Wirkstoffs aus dem ersten Tank 20, der über ein Ventil 54 und Leitungen mit den Spritzdüsen 30 verbunden ist, gezielt zu steuern.

Der zweite Tank 28 enthält eine Spülflüssigkeit (Wasser) und in der Figur 1 ist ein unbemanntes Fluggerät 38 an den zweiten Tank 28 angedockt, dessen Funktion und Aufgabe weiter unten beschrieben werden. Die Spülflüssigkeit aus dem zweiten Tank 28 dient nach dem Ende der Arbeit dazu, die Spritzdüsen 30 zu reinigen, indem durch das Ventil 54 der erste Tank 20 von den zu den Spritzdüsen 30 führenden Leitungen getrennt und der zweite Tank 28 mit diesen Leitungen verbunden wird. Hierzu ist das Ventil 54 mit der Steuereinrichtung 52 verbunden, die wiederum mit einer in der Kabine 22 angeordneten Bedienerschnittstelle 56 verbunden ist, über welche der Bediener den Spülvorgang veranlassen kann. Das zweite Ventil 54 kann auch dazu eingerichtet sein, die Spülflüssigkeit aus dem zweiten Tank 28 in den ersten Tank 20 einzuleiten, um dessen Füllstand bei Bedarf zu ergänzen, ggf. auf eine entsprechende Eingabe des Bedieners über die Bedienerschnittstelle 56 hin. Der Bediener kann in diesem Fall eine Ergänzung der Menge des Wirkstoffs im ersten Tank 20 von Hand vornehmen.

Den Tanks 20, 28 sind mit der Steuereinrichtung 52 verbundene Sensoren 40, 42 zugeordnet, um den jeweiligen Füllstand zu erfassen. Die Steuereinrichtung 52 ist zudem mit einem Empfänger 44 zum Empfang von Signalen eines satellitenbasierten Positionsbestimmungssystems (GNSS, wie GPS oder Galileo) verbunden. In einer fortgeschrittenen Ausführungsform kann die Steuereinrichtung 52 die Geschwindigkeit und Lenkrichtung des Verteilfahrzeugs 10 selbsttätig kontrollieren, basierend auf einer abgespeicherten elektronischen Karte der zu beaufschlagenden Fläche und der Signale des Empfängers 44. Die Signale des Empfängers 44 können zudem u.a. dazu dienen, eine in einem Speicher abgelegte, elektronische Karte zu erstellen, in welcher dokumentiert wird, an welchen Stellen der Fläche wie viel Material ausgebracht wurde.

### Fluggerät

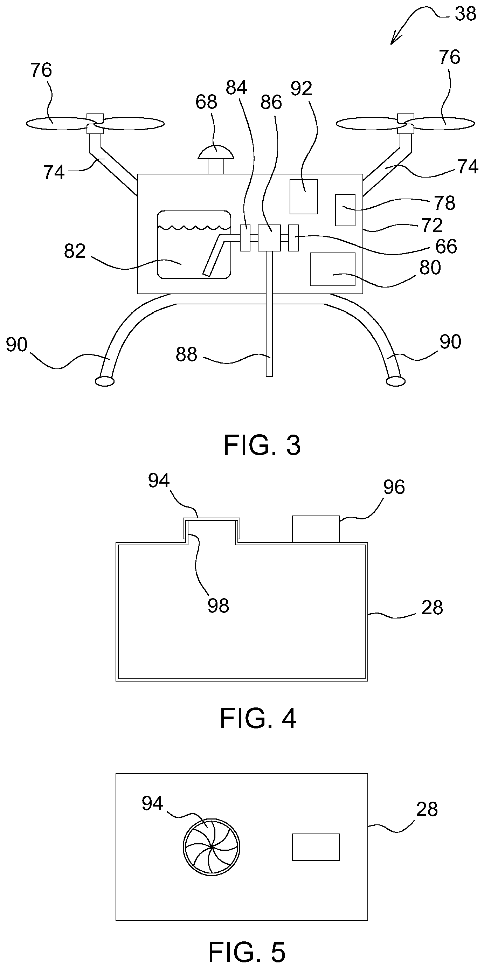

Das Fluggerät 38 ist in der Figur 3 in einer gegenüber der Figur 1 vergrößerten seitlichen Ansicht dargestellt. Es umfasst ein Gehäuse 72, an dessen Oberseite eine Anzahl an Rotoren 76 an Halterungen 74 angebracht sind. Das Gehäuse 72 hat an seiner Unterseite einige Stützen 90, mit den es auf dem Boden landen kann. Innerhalb des Gehäuses 72 sind eine Steuerung 78, eine Energiequelle 80, z.B. ein Akkumulator, eine Kommunikationseinheit 92 und ein Tank 82 angeordnet. Der Tank 82 ist über ein Ventil 84 mit einer Leitung 88 verbunden, die sich unterhalb des Gehäuses 72 nach unten erstreckt. In einer möglichen Ausführungsform ist die Leitung 88 in das Gehäuse 72 einziehbar, wozu sie aus flexiblem Material bestehen und auf einer durch einen Antrieb 66 antreibbaren Haspel 86 aufgewickelt sein kann. Die Figur 3 zeigt die Leitung 88 im ausgefahrenen Zustand. Bei einer anderen, nicht gezeigten Ausführungsform kann die Leitung 88 auch aus relativ zueinander teleskopierbaren Abschnitten aufgebaut sein, die durch den Antrieb 66 zueinander bewegbar sind.

Die Kommunikationseinheit 92 kann mit einer gleichartigen Kommunikationseinheit 46 des Verteilfahrzeugs 10 direkt oder über eine oder mehrere, beliebige Relaisstationen in Verbindung stehen, unter Verwendung eines beliebigen Protokolls, wie beispielsweise für Mobiltelefonie oder Internetkommunikation. Die Steuerung 78 kann somit mit der Steuereinrichtung 52 des Verteilfahrzeugs 10 kommunizieren, sodass diese in beiden Richtungen Informationen untereinander austauschen können, oder beide kommunizieren getrennt voneinander mit einem Server 102, der sich an einer beabstandeten Station 100 befindet. Der Server 102 kann somit beispielsweise in die Cloud ausgelagert werden. Die Steuerung 78 kann auch die Rotoren 76 kontrollieren, d.h. sie dient als Flugsteuerung und ist dazu mit einem Empfänger 68 zum Empfang von Signalen eines satellitenbasierten Positionsbestimmungssystems (GNSS, wie GPS oder Galileo), ggf. einschließlich eines ortsfesten oder beweglichen Korrektursystems (RTK) verbunden, und sie kontrolliert das Ventil 84 und ggf. den Antrieb 66 zum Ein- und Ausfahren der Leitung 88.

### Andocken an das Verteilfahrzeug

Das Fluggerät 38 kann, wie in der Figur 1 gezeigt, auf dem zweiten Tank 28 des Verteilfahrzeugs 10 landen. Eine Öffnung 98 an der Oberseite des zweiten Tanks 28 ist durch einen Deckel 94 verschließbar, der durch einen mit der Steuereinrichtung 52 signalübertragend verbundenen Aktor 96 zwischen einer (in Figur 4 gezeigten) geschlossenen Stellung und einer geöffneten Stellung bewegbar ist. Der Deckel 94 kann, wie in der Figur 4 gezeigt, als Ganzes durch den Aktor 96 verschiebbar sein, oder er ist, wie in der Ausführungsform nach Figur 5 gezeigt, als Irisblende in der Art eines Kamerazentralverschlusses oder einer Objektivblende ausgeführt. Dadurch besteht die Möglichkeit, dass das Fluggerät 38 auf dem zweiten Tank 28 landet, der Aktor 96 den Deckel 94 öffnet und der Antrieb 66 die Leitung 88 ausfährt, sodass diese sich durch die Öffnung 98 in den zweiten Tank 28 erstreckt und das Ventil 84 geöffnet wird, um eine Spülflüssigkeit aus dem Tank 82 des Fluggeräts 38 in den zweiten Tank 28 umzufüllen.

Die gezeigte Anordnung ist geeignet, harmlose Spülflüssigkeiten, wie Wasser, zu transportieren und zu überladen. Wenn das Fluggerät 38 alternativ dazu oder zusätzlich einen Wirkstoff (Pestizid o.ä.) transportieren soll, besteht die Möglichkeit, einen geschlossenen, den Wirkstoff enthaltenden Behälter zu transportieren, der vom Bediener des Verteilfahrzeugs 10 von Hand aus dem Fluggerät 38 entnommen und dessen Inhalt in bisher gebräuchlicher Weise in den Tank 20 gefüllt wird. Man könnte hierfür ein so genanntes geschlossenes Transfersystem (vgl. EP 3 892 584 A1) verwenden, bei dem ein unbeabsichtigtes Austreten des Wirkstoffs ausgeschlossen wird. Es wäre auch denkbar, ein derartiges System zu automatisieren, d.h. die dort bisher manuell durchgeführten Vorgänge durch Aktoren des Fluggerätes 38 und/oder des Verteilfahrzeugs 10 durchzuführen, um den Wirkstoff vollautomatisch durch ein geschlossenes Transfersystem vom Fluggerät 38 in den Tank 20 des Verteilfahrzeugs 10 zu überladen.

### Betriebsweise

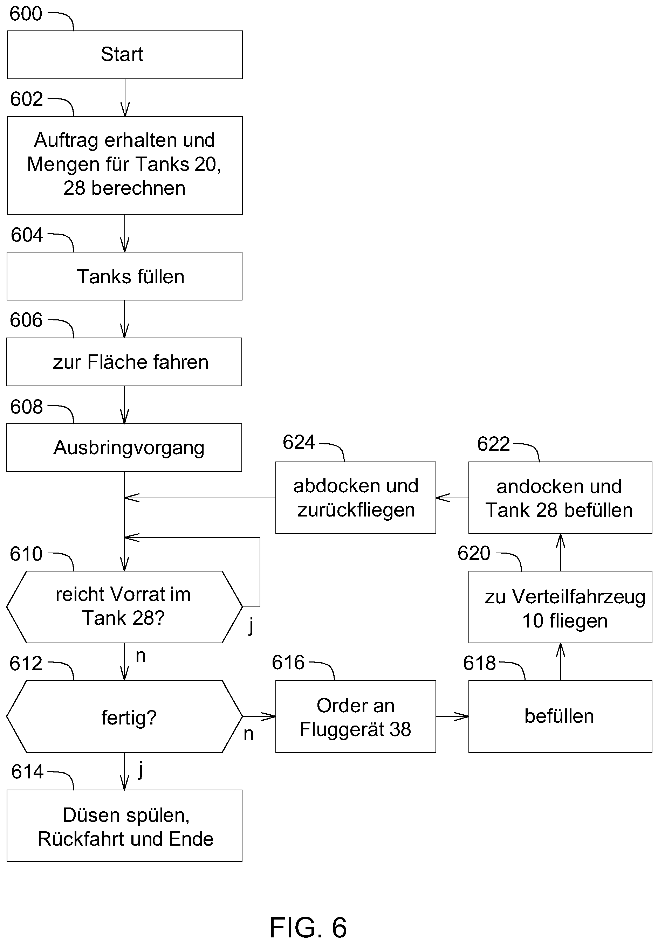

Die Figur 6 zeigt eine mögliche Vorgehensweise für den Betrieb des Verteilfahrzeugs 10 und des Fluggeräts 38.

Nach dem Start im Schritt 600, in dem die Steuereinrichtung 52, die Steuerung 72 und der Server 102 sich durch Austausch geeigneter Identifikationsdaten und ggf. weiterer Parameter, wie Tankvolumina, aktueller Positionen, Art des Wirkstoffs etc. gegenseitig authentisieren können (weitere Authentisierungen können später auch noch in den Schritten 602, 616 und 622 erfolgen), erhält die Steuereinrichtung 52 des Verteilfahrzeugs 10 vom Server 102 einen Auftrag.

Ein Landwirt oder eine von ihm beauftragte Person ist somit in der Lage, auf dem Server 102 einen Auftrag vorzugeben, den das Verteilfahrzeug 10 durchführen soll. Dieser Auftrag enthält Informationen zur Lage einer von dem Verteilfahrzeug 10 mit einem Wirkstoff zu beaufschlagenden Fläche (Feld), zum Wirkstoff und ggf. zu den Mengen. Im Server 102 können beliebige, weitere Details zur beabsichtigten Vorgehensweise abgelegt sein, insbesondere historische Daten zu zurückliegenden Bearbeitungen der Fläche, Bodeneigenschaften, Ergebnisse von Erkundungen etc. Zudem können im Server 102 Daten hinsichtlich technischer Gegebenheiten und Parameter des Verteilfahrzeugs 10 abgelegt sein.

Die genaue Planung der bei der Abwicklung des Auftrags durchzuführenden Vorgehensweise, wie abzufahrende Wege auf der Straße und auf dem Feld, benötigte Mengen an Wirkstoff und Spülmittel etc., kann durch den Server 102 oder die Steuereinrichtung 52 des Verteilfahrzeugs 10 erfolgen, oder zumindest die Mengen werden bereits mit der Erteilung des Auftrags durch den Landwirt vorgegeben. Der Steuereinrichtung 52 liegen nach dem Schritt 602 demnach hinreichende Informationen vor, um den Auftrag abzuwickeln. Unter anderem liegen der Steuereinrichtung 52 Informationen vor, wie viel Wirkstoff und Wasser in den ersten Tank 20 und wie viel Spülflüssigkeit in den zweiten Tank 28 einzufüllen ist. Wenn bei der Ausführung des Auftrags auf die Sensoren 34 zurückgegriffen werden soll, d.h. die genauen Ausbringmengen erst auf dem Feld bestimmt werden, wird durch die planende Einrichtung (Server 102 oder Steuereinrichtung 52) auf Erfahrungswerte zurückgegriffen, die einen hinreichenden Sicherheitszuschlag enthalten, damit die Tanks 20, 28 nicht während des Auftrags leer werden.

Es folgt der Schritt 604, in dem die Tanks des Verteilfahrzeugs 10 befüllt werden, unter Verwendung der im Schritt 602 bestimmten bzw. festgelegten Mengen. Im Schritt 606 fährt der Bediener das Verteilfahrzeug 10 zur zu beaufschlagenden Fläche und im Schritt 608 wird der Ausbringvorgang durchgeführt, unter Berücksichtigung der im Schritt 602 erhaltenen Informationen. Hierbei kann auf die Sensoren 34 zur Bestimmung der jeweiligen Ausbringmengen zurückgegriffen werden. Falls nötig, kann dabei Spülflüssigkeit aus dem zweiten Tank 28 in den ersten Tank 20 umgefüllt werden, wie oben beschrieben.

Im Schritt 610 wird geprüft, ob die Menge an Spülflüssigkeit im zweiten Tank 28 voraussichtlich zur Durchführung des gesamten Auftrags ausreicht. Hierbei können der aktuelle Füllstand des ersten und zweiten Tanks 20, 28 anhand der Sensoren 40, 42 und die bisher bei der Abwicklung des Auftrags ausgebrachten Mengen berücksichtigt und auf die verbleibende Fläche extrapoliert werden, und es wird berücksichtigt, wie viel Spülflüssigkeit für das abschließende Spülen der Spritzdüsen 30 im Schritt 614 benötigt wird. Reicht die Menge voraussichtlich aus, folgt wieder der Schritt 610 und andernfalls der Schritt 612, in dem abgefragt wird, ob der Auftrag erledigt ist. Ist das der Fall, folgt der Schritt 614, in dem die Spritzdüsen 30 mit der Spülflüssigkeit aus dem zweiten Tank 28 gespült werden, die Rückfahrt zum Ursprungsort durchgeführt und der Auftrag beendet wird.

Sollte sich hingegen im Schritt 610 ergeben, dass die Menge an Spülflüssigkeit im zweiten Tank 28 nicht zur Durchführung des gesamten Auftrags ausreicht, folgen (ggf. nach einer Bestätigung des Bedieners über die Bedienerschnittstelle 56) die Schritte 616 bis 624. Im Schritt 616 sendet die Steuereinrichtung 52 des Verteilfahrzeugs 10 eine entsprechende Information an den Server 102, der diese an die Steuereinrichtung 72 des Fluggeräts 38 weiterleitet, oder direkt an die Steuereinrichtung 72 des Fluggeräts 38. In dieser Information sind Angaben zur benötigten Menge an Spülflüssigkeit und zur Position des Verteilfahrzeugs 10 enthalten.

Im Schritt 618 wird der Tank 82 des Fluggeräts 38 mit der benötigten Menge an Spülflüssigkeit gefüllt. Das kann durch eine beauftragte Person erfolgen, die über eine geeignete Schnittstelle (Mobiltelefon, Anzeige am Fluggerät 38 oder dgl.) entsprechend informiert wird, oder selbsttätig durch das Fluggerät 38, z.B. indem das Ventil 84 als Pumpe ausgeführt ist und die Spülflüssigkeit selbständig in der benötigten Menge durch die Leitung 88 aus einem geeigneten Behälter o.ä. ansaugt.

Im Schritt 620 fliegt das Fluggerät 38 zum Verteilfahrzeug 10. Hierbei kann auf die der Steuereinrichtung 52 anhand der Signale des Empfängers 44 bekannte Position des Verteilfahrzeugs 10, dessen anhand des erhaltenen Auftrags vorgegebenen oder geplanten, zukünftigen Weg über die zu bearbeitende Fläche, ggf. dessen anhand der Reaktionszeit der Sensoren 34 und zugehörigen Aktoren der Spritzdüsen 30 vorgegebene Geschwindigkeit (vgl. EP 3 381 281 A1) und somit an sich bekannte Vorgehensweisen zur Planung des Wegs eines Versorgungsfahrzeugs zu einem sich bewegenden landwirtschaftlichen Fahrzeug (s. beispielsweise EP 2 954 769 A1) und mögliche Einschränkungen des Flugwegs (Vermeiden bewohnter Gebiete, Straßen etc.) zurückgegriffen werden.

Während des Fluges und ggf. auch schon beim Befüllen seines Tanks 82 kann das Fluggerät 38 regelmäßige Informationen über seinen Status (Position, Geschwindigkeit, Ladezustand der Energiequelle 80, Füllstand des Tanks 82 etc.) an die Steuereinrichtung 52 geben. Diese Informationen können auf der Bedienerschnittstelle 56 angezeigt und/oder nötigenfalls beim Betrieb des Verteilfahrzeugs 10 berücksichtigt werden, z.B. wenn es länger als ursprünglich erwartet dauern sollte, bis das Fluggerät 38 beim Verteilfahrzeug 10 ankommt.

Falls bisher die Kommunikation zwischen dem Fluggerät 38 und dem Verteilfahrzeug 10 über den Server 102 erfolgt ist, kann bei Unterschreitung eines bestimmten Abstands auf eine direkte Kommunikation zwischen der Steuereinheit 52 und der Steuerung 78 übergegangen werden, um Zeitverzögerungen in der Kommunikation durch den Umweg über den Server 102 zu vermeiden. Hierzu können die Kommunikationseinheiten 92 und 46 direkte Verbindung aufnehmen, z.B. über ein eine lokale Kommunikation erlaubendes Protokoll wie WLAN (WiFi) oder Bluetooth, Zigbee oder dgl. Auch kann hier eine weitere gegenseitige Identifikation bzw. Authentisierung erfolgen, z.B. über optische Merkmale (Bar- oder QR-Codes) oder elektronische Merkmale, wie RFID.

Im Schritt 622 erfolgt somit ein Landen und Andocken des Fluggeräts 38 auf dem Verteilfahrzeug 10 und es wird der zweite Tank 28 in der beschriebenen Weise befüllt, d.h. die Steuereinrichtung 52 und die Steuerung 72 arbeiten derart zusammen, dass selbsttätig das Fluggerät 38 auf dem zweiten Tank 28 landet, der Aktor 96 den Deckel 94 öffnet und der Antrieb 66 die Leitung 88 ausfährt, sodass die Leitung 88 sich dann durch die Öffnung 98 in den zweiten Tank 28 erstreckt und das Ventil 84 geöffnet wird, um die Spülflüssigkeit, bei der es sich in der Regel um sauberes Wasser handelt, aus dem Tank 82 des Fluggeräts 38 in den zweiten Tank 28 umzufüllen. Das Fluggerät 38 kann am Verteilfahrzeug 10 für den Überladevorgang auch mechanisch verriegelt werden, wie beispielsweise in der DE 10 2015 206 844 A1 beschrieben.

Es folgt der Schritt 624, in dem die Steuereinrichtung 52 und die Steuerung 72 veranlassen, dass der Antrieb 66 die Leitung 88 einfährt und das Fluggerät 38 wieder zu seinem Standort zurückfliegt, während der Aktor 96 nach dem Einfahren der Leitung 88 den Deckel 94 wieder schließt. Anschließend wird der Vorgang mit dem Schritt 610 fortgesetzt. Die Schritte 616 bis 624 können bei weiterhin fahrendem Verteilfahrzeug 10 durchgeführt werden, d.h. es muss nicht zum Füllen des zweiten Tanks 28 anhalten.

### Mögliche Abwandlungen und Verfeinerungen

In den vorhergehenden Ausführungen wurde davon ausgegangen, dass das Fluggerät 38 den zweiten Tank 28 mit der Spülflüssigkeit befüllt. Es wäre auch denkbar, anstelle dessen oder zusätzlich dazu, durch das Fluggerät 38 den ersten Tank 20 mit Wasser oder mit einer wässrigen Lösung des Wirkstoffs zu befüllen. Im zweiten Fall kann das Fluggerät 38 mit einem weiteren Tank für die wässrige Lösung des Wirkstoffs versehen werden oder ein festes oder flüssiges Konzentrat des Wirkstoffs transportieren.

Falls es notwendig werden sollte, können bei der Ausführung es Auftrags die Schritte 616 bis 624 durch das Fluggerät 38 mehrfach durchgeführt werden, und/oder es kommen mehrere Fluggeräte 38 zum Einsatz.

Die oben beschriebenen Aufgaben bzw. Rechenfähigkeiten der Steuereinrichtung 52 des Verteilfahrzeugs 10 können ganz oder zum Teil auf den Server 102 ausgelagert werden. In diesem Fall würden entsprechende Daten, insbesondere hinsichtlich der Füllstände der Tanks 20, 28, in bestimmten Zeitabständen elektronisch über die Kommunikationseinheit 46 auf den Server 102 und nötigenfalls Anweisungen für Aktoren des Verteilfahrzeugs 10 in anderer Richtung zurück übertragen. Der Server 102 wäre in diesem Fall als (Bestandteil der) Steuereinrichtung 52 des Verteilfahrzeugs 10 anzusehen.

### Schritte der Figur 6

600 Start
602 Auftrag erhalten und Mengen für Tanks 20, 28 berechnen
604 Tanks füllen
606 zur Fläche fahren
608 Ausbringvorgang
610 reicht Vorrat im Tank 28?
612 fertig?
614 Düsen spülen, Rückfahrt und Ende
616 Order an Fluggerät 38
618 befüllen
620 zu Verteilfahrzeug 10 fliegen
622 andocken und Tank 28 befüllen
624 abdocken und zurückfliegen

## Patentansprüche

1. Verfahren zum Betreiben eines landwirtschaftlichen Verteilfahrzeugs (10) mit einem Tank (20, 28) für eine auszubringende Flüssigkeit, einem Verteilergestänge (26) mit daran angebrachten Spritzdüsen (30) zur Verteilung der Flüssigkeit auf einer Fläche und einem sich auf dem Boden abstützenden Fahrgestell (12), das in einer Vorwärtsrichtung über die Fläche bewegbar ist, **dadurch gekennzeichnet, dass** bedarfsweise eine Nachfüllung des Inhalts des Tanks (20, 28) über ein Fluggerät (38) durchgeführt wird.

2. Verfahren nach Anspruch 1, wobei das Fluggerät (38) in einem Tank (82) eine Spülflüssigkeit, insbesondere Wasser, und/oder eine Flüssigkeit mit einem darin enthaltenen Wirkstoff zur Verteilfahrzeug (10) transportiert.

3. Verfahren nach Anspruch 1 oder 2, wobei eine elektronische Steuereinrichtung (52) des Verteilfahrzeugs (10) erkennt, ob der Füllstand des Tanks (20, 28) für die Ausführung eines vorgegebenen Auftrags ausreicht und wenn das nicht der Fall ist, eine Steuerung (72) des Fluggeräts (38) instruiert, selbsttätig zur Verteilfahrzeug (10) zu fliegen, um den Tank (20, 28) aufzufüllen.

4. Verfahren nach Anspruch 3, wobei am Tank (20, 28) des Verteilfahrzeugs (10) eine obere Öffnung (98) vorgesehen ist, die mittels eines Deckels (94) verschließbar ist und der Deckel (94) vor dem Befüllen des Tanks (20, 28) durch einen von der Steuereinrichtung (52) gesteuerten Aktor (96) geöffnet wird.

5. Verfahren nach Anspruch 4, wobei die Steuereinrichtung (52) des Verteilfahrzeugs (10) und die Steuerung (72) des Fluggeräts (38) derart zusammenarbeiten, dass das Fluggerät (38) auf dem Tank (28) landet, der Aktor (96) den Deckel (94) öffnet, ein Antrieb (66) eine über ein Ventil (84) mit dem Tank (82) des Fluggeräts (38) verbundene Leitung (88) ausfährt, sodass diese sich durch die Öffnung (98) in den Tank (28) erstreckt und ein Ventil (84) geöffnet wird, um den Inhalt aus dem Tank (82) des Fluggeräts (38) in den Tank (28) des Verteilfahrzeugs (10) umzufüllen.

6. Verfahren nach einem der Ansprüche 3 bis 5, wobei das Verteilfahrzeug (10) mit einem Sensor (34) zur Erkennung des Bedarfs der zu beaufschlagenden Fläche mit der auszubringenden Flüssigkeit versehen ist und die Steuereinrichtung (52) die Spritzdüsen (30) in Abhängigkeit von einem Signal des Sensors (34) ansteuert.

7. Verfahren nach einem der Ansprüche 3 bis 6, wobei die Steuereinheit (52) des Verteilfahrzeugs (10) nach Erhalt eines vorgegebenen Auftrags die vom Verteilfahrzeug (10) im Tank (20, 28) mitzuführenden Mengen an Flüssigkeit berechnet oder diese Mengen im Auftrag bereits vorgegeben sind.

8. Verfahren nach einem der Ansprüche 3 bis 7, wobei ein erster Tank (20) des Verteilfahrzeugs (10) eine Flüssigkeit mit einem Wirkstoff enthält, ein zweiter Tank (28) des Verteilfahrzeugs (10) eine Spülflüssigkeit enthält, der Inhalt des zweiten Tanks (28) während der Durchführung des Auftrags in den ersten Tank (20) umgefüllt wird und der zweite Tank (28) durch das Fluggerät (38) aufgefüllt wird.

9. Verfahren nach einem der Ansprüche 3 bis 8, wobei die Steuereinheit (52) des Verteilfahrzeugs (10) und die Steuereinrichtung (52) des Fluggeräts (38) direkt oder über einen dazwischen geschalteten Server (102) kommunizieren.

10. Anordnung, umfassend ein Verteilfahrzeug (10) und ein Fluggerät (38), zur Durchführung eines Verfahrens nach einem der vorhergehenden Ansprüche.

## Claims

1. Method for operating an agricultural distribution vehicle (10) having a tank (20, 28) for a liquid to be dispensed, a distributor boom (26) with spray nozzles (30) fitted thereon for distributing the liquid over an area, and a chassis (12) which is supported on the ground and is movable over the area in a forwards direction, **characterized in that** the contents of the tank (20, 28) are refilled as required via an aircraft (38).

2. Method according to Claim 1, wherein the aircraft (38) transports, in a tank (82), a rinsing liquid, in particular water, and/or a liquid with an active substance contained therein to the distribution vehicle (10).

3. Method according to Claim 1 or 2, wherein an electronic control device (52) of the distribution vehicle (10) identifies whether the level of the tank (20, 28) is sufficient for carrying out a predetermined order and, if this is not the case, instructs a control system (72) of the aircraft (38) to automatically fly to the distribution vehicle (10) in order to top up the tank (20, 28).

4. Method according to Claim 3, wherein on the tank (20, 28) of the distribution vehicle (10) an upper opening (98) is provided, which is closable by means of a cover (94) and, before the filling of the tank (20, 28), the cover (94) is opened by an actuator (96) controlled by the control device (52).

5. Method according to Claim 4, wherein the control device (52) of the distribution vehicle (10) and the control system (72) of the aircraft (38) cooperate in such a way that the aircraft (38) lands on the tank (28), the actuator (96) opens the cover (94), a drive (66) extends a pipe (88), which is connected via a valve (84) to the tank (82) of the aircraft (38), such that said pipe extends through the opening (98) into the tank (28) and a valve (84) is opened in order to transfer the contents from the tank (82) of the aircraft (38) to the tank (28) of the distribution vehicle (10).

6. Method according to any one of Claims 3 to 5, wherein the distribution vehicle (10) is provided with a sensor (34) for detecting the need for the area to be acted upon with the liquid to be dispensed, and the control device (52) activates the spray nozzles (30) depending on a signal of the sensor (34).

7. Method according to any one of Claims 3 to 6, wherein the control unit (52) of the distribution vehicle (10) calculates the quantities of liquid to be carried along in the tank (20, 28) by the distribution vehicle (10) after a predetermined order is received, or these quantities are already predetermined in the order.

8. Method according to any one of Claims 3 to 7, wherein a first tank (20) of the distribution vehicle (10) contains a liquid with an active substance, a second tank (28) of the distribution vehicle (10) contains a rinsing liquid, the contents of the second tank (28) are transferred to the first tank (20) while the order is being carried out and the second tank (28) is topped up by the aircraft (38).

9. Method according to any one of Claims 3 to 8, wherein the control unit (52) of the distribution vehicle (10) and the control device (52) of the aircraft (38) communicate directly or via a server (102) connected inbetween.

10. Arrangement comprising a distribution vehicle (10) and an aircraft (38), for carrying out a method according to any one of the preceding claims.

## Revendications

1. Procédé destiné à faire fonctionner un véhicule de répartition (10) agricole avec un réservoir (20, 28) pour un liquide à distribuer, une barre de répartition (26) avec des buses de pulvérisation (30) installées dessus pour répartir le liquide sur une surface et un train de roulement (12) prenant appui sur le sol, qui peut être déplacé dans une direction vers l'avant sur la surface, **caractérisé en ce que** si besoin un remplissage ultérieur du contenu du réservoir (20, 28) est mis en œuvre par un engin volant (38).

2. Procédé selon la revendication 1, l'engin volant (38) transportant dans un réservoir (82) un liquide à pulvériser, en particulier de l'eau, et/ou un liquide avec un principe actif contenu dans celui-ci vers le véhicule de répartition (10).

3. Procédé selon la revendication 1 ou 2, un dispositif de commande (52) électronique du véhicule de répartition (10) identifiant si l'état de remplissage du réservoir (20, 28) est suffisant pour l'exécution d'une application spécifiée, et dans le cas contraire, ordonne à une commande (72) de l'engin volant (38) de voler de manière autonome vers le véhicule de répartition (10) pour remplir le réservoir (20, 28).

4. Procédé selon la revendication 3, une ouverture supérieure (98) étant prévue sur le réservoir (20, 28) du véhicule de répartition (10), laquelle peut être fermée au moyen d'un couvercle (94) et le couvercle (94) étant ouvert par un actionneur (96) commandé par le dispositif de commande (52) avant le remplissage du réservoir (20, 28).

5. Procédé selon la revendication 4, le dispositif de commande (52) du véhicule de répartition (10) et la commande (72) de l'engin volant (38) collaborant de telle manière que l'engin volant (38) atterrit sur le réservoir (28), l'actionneur (96) ouvre le couvercle (94), un entraînement (66) sort une conduite (88) reliée au réservoir (82) de l'engin volant (38) par une soupape (84) si bien que celle-ci s'étend à travers l'ouverture (98) dans le réservoir (28) et une soupape (84) est ouverte pour transvaser le contenu provenant du réservoir (82) de l'engin volant (38) dans le réservoir (28) du véhicule de répartition (10).

6. Procédé selon l'une des revendications 3 à 5, le véhicule de répartition (10) étant pourvu d'un capteur (34) destiné à identifier le besoin de la surface à exposer en liquide à distribuer et le dispositif de commande (52) pilotant les buses de pulvérisation (30) en fonction d'un signal du capteur (34).

7. Procédé selon l'une des revendications 3 à 6, l'unité de commande (52) du véhicule de répartition (10) calculant les quantités de liquide à acheminer depuis le véhicule de répartition (10) dans le réservoir (20, 28) à réception d'une application spécifiée ou lesdites quantités étant déjà spécifiées dans l'application.

8. Procédé selon l'une des revendications 3 à 7, un premier réservoir (20) du véhicule de répartition (10) contenant un liquide avec un principe actif, un deuxième réservoir (28) du véhicule de répartition (10) contenant un liquide de rinçage, le contenu du deuxième réservoir (28) étant transvasé dans le premier réservoir (20) pendant la mise en œuvre de l'application et le deuxième réservoir (28) étant rempli par l'engin volant (38).

9. Procédé selon l'une des revendications 3 à 8, l'unité de commande (52) du véhicule de répartition (10) et le dispositif de commande (52) de l'engin volant (38) communiquant directement ou par un serveur (102) intermédiaire.

10. Ensemble, comprenant un véhicule de répartition (10) et un engin volant (38), destiné à mettre en œuvre un procédé selon l'une des revendications précédentes.
